# EUROPEAN PATENT SPECIFICATION

(11) **EP 3 277 441 B1**
(45) Date of publication and mention of the grant of the patent: **19.02.2020**
(21) Application number: 16721230.7
(22) Date of filing: 31.03.2016
(51) Int. Cl.: B08B 3/02, B08B 9/00, A21C 11/16

(54) **DIE-WASHING MACHINE AND METHOD FOR WASHING DIES FOR PASTA**
WASCHMASCHINE FÜR PRESSFORMEN UND VERFAHREN ZUM WASCHEN VON PRESSFORMEN FÜR TEIGWAREN
MACHINE À LAVER DES MATRICES ET PROCÉDÉ POUR LAVER DES MATRICES DE PÂTES ALIMENTAIRES

(30) Priority: 31.03.2015 IT FI20150096
(43) Date of publication of application: 07.02.2018
(73) Proprietor: Landucci S.r.l., 51100 Pistoia (IT)
(72) Inventor: LANDUCCI, Lando, 51100 Pistoia (IT)
(74) Representative: Mannucci, Michele
(86) International application number: PCT/IB2016/051821
(87) International publication number: WO 2016/157107

(56) References cited:
- EP-A1- 2 527 049
- EP-A2- 0 824 973
- DE-A1- 3 820 982
- FR-A1- 2 576 532
- JP-A- 2005 342 639
- US-A- 716 459

## Description

### Technical field

The present invention relates to improvements to so-called die-washing machines used to wash dies for pasta.

More in particular, embodiments described herein refer to improvements in hydraulic circuits to supply water or other washing liquid for die washing.

### Background art

To produce long-cut pasta like spaghetti and noodles, or short-cut pasta like penne etc., dies are used, through which the fresh dough is pressed in order to produce the desired pasta form through extrusion. The dies have a plurality of extrusion channels where inserts are arranged, each of which has a respective through hole shaped according to the dimension and the form of the pasta being produced.

When a batch of pasta has been processed, the die shall be washed in order to remove the residual dough therefrom. To this end, so-called die-washing machines are used. Typically, the die-washing machines comprise one or more seats for the die to be washed, provided with die moving members, for instance members suitable to impart the dies a rotation around a symmetry axis of the die, or a reciprocating translation. A pair of movable nozzles is provided for each seat, facing each other and arranged at the sides of the die, so as to project respective jets of water, or other washing liquid, against the die, on two opposite sides of the die, i.e. the side where the dough enters to be extruded and the side where the extruded pasta exits.

The combined movement of the die in the seat and of the nozzles, typically mounted on pivoting arms, allows to invest all die inserts and the channels where the inserts are mounted with respective water jets, thus removing residual dough therefrom.

In order to wash effectively, it is necessary that the used water is under a sufficiently high pressure, so as to achieve the inside of the channels, where the inserts are housed, with sufficiently fast water jets to remove the residual dough. However, due to the way in which the inserts are mounted in the die channels, too high pressures may cause displacements of the inserts. This limits to a certain extent the pressure usable for the washing. Specific difficulties arise in the case of washing of dies for gluten-free pasta, as the residual dough is, in this case, more difficult to be removed.

US 716459 discloses a device for cleaning dies according to the preamble of claim 1 and a method for cleaning dies according to the preamble of claim 11.

There is therefore the need for improvements to these machines, in order to have a more effective washing without the risk of modifying the position of the die inserts.

### Summary of the Invention

The invention provides an improved device according to claim 1 and an improved method according to claim 11, for cleaning dies.

According to a first aspect, a die-washing machine for washing dies for pasta is disclosed, comprising at least a first nozzle arranged and configured to project at least one jet of a washing liquid against a first side of a die to be washed; at least a second nozzle arranged and configured to project at least one jet of washing liquid against a second side of the die, the first nozzle and the second nozzle being oriented in opposite directions; a pumping system to supply washing liquid to the first nozzle and to the second nozzle. The pumping system is configured to supply the washing liquid to the first nozzle under a first pressure and to supply the washing liquid to the second nozzle under a second pressure, the first pressure and the second pressure being different from each other.

The pumping system may advantageously comprise a first pumping group with a first pump and a second pumping group with a second pump. The two pumps may have different delivery pressures to supply the two opposite nozzles with washing liquid, for example water, under different pressures.

The two pressure values may differ from each other even by some ten bars. According to further embodiments, the pumping system has only one pump and a pressure reducing system, for example a throttle or throttling valve, in order to have two different delivery pressures at the two opposite nozzles.

According to a further aspect, a method is provided to wash a die for pasta through at least a first nozzle oriented towards a first side of the die and at least a second nozzle oriented towards a second side of the die. The method comprises the following steps:
generating a first jet of washing liquid with the first nozzle directed towards the die;
generating a second jet of washing liquid with the second nozzle directed towards the die;
moving the die and the nozzles one with respect to the others. The washing liquid is supplied to the first nozzle and to the second nozzle under different pressure.

Using jets of washing liquids under different pressures on the two sides of the die, it is possible to use significantly higher pressures on the die side corresponding to the entrance of the dough during the extrusion step, i.e. on the side where the flow of washing liquid does not risk removing the die inserts from their seats. This allows a significantly more effective washing of the dies. For example, if in the traditional die-washing machines pressures of about 60 bars are used for both the jets, in the machine according to the invention the pressure of the washing liquid at the dough entrance side may be increased up to 100 bars, keeping the pressure at the opposite side at about 60 bars.

The nozzles are substantially parallel. The die support seat and the nozzles are so configured that, during washing, the jets of washing liquid generated by the nozzles are directed towards the inside of the die channels, i.e. approximately parallel to the channel axes, in order to direct the jets of washing liquid in the dough passages provided in the die.

Features and embodiments are disclosed here below and are further set forth in the appended claims. The above brief description sets forth features of the various embodiments of the present invention in order that the detailed description that follows may be better understood and in order that the present contributions to the art may be better appreciated. There are, of course, other features of the invention that will be described hereinafter and which will be set forth in the appended claims. In this respect, before explaining several embodiments of the invention in details, it is understood that the various embodiments of the invention are not limited in their application to the details of the construction and to the arrangements of the components set forth in the following description or illustrated in the drawings. The invention is capable of other embodiments and of being practiced and carried out in various ways. Also, it is to be understood that the phraseology and terminology employed herein are for the purpose of description and should not be regarded as limiting.

As such, those skilled in the art will appreciate that the conception, upon which the disclosure is based, may readily be utilized as a basis for designing other structures, methods, and/or systems for carrying out the several purposes of the present invention, the scope of which is limited by the appended claims.

### Brief description of the drawings

A more complete understanding of the illustrated embodiments of the invention and the many advantages achieved will be obtained with reference to the detailed description below in combination with the appended drawings, wherein:
Fig. 1 is a front view of a die according to the line I-I of Fig. 2;
Fig. 2 is a cross-section according to the line II-II of Fig. 1;
Fig. 3 is a cross-section according to the line III-III of Fig. 2;
Fig. 3A shows a cross-section analogous to that of Fig. 3 in a modified embodiment;
Fig. 4 is a plan view of a die-washing machine in an embodiment of the invention;
Fig. 5 shows a cross-section according to V-V in Fig. 6;
Fig. 6 shows a cross-section according to VI-VI in Fig. 5; and
Figs. 7 and 8 show a front axonometric view and a rear axonometric view, respectively, of the die-washing machine.

### Detailed description of embodiments

The following detailed description of the exemplary embodiments refers to the accompanying drawings. The same reference numbers in different drawings identify the same or similar elements. Additionally, the drawings are not necessarily drawn to scale. Also, the following detailed description does not limit the invention. Instead, the scope of the invention is defined by the appended claims.

Reference throughout the specification to "one embodiment" or "an embodiment" or "some embodiments" means that the particular feature, structure or characteristic described in connection with an embodiment is included in at least one embodiment of the subject matter disclosed. Thus, the appearance of the phrase "in one embodiment" or "in an embodiment" or "in some embodiments" in various places throughout the specification is not necessarily referring to the same embodiment(s). Further, the particular features, structures or characteristics may be combined in any suitable manner in one or more embodiments.

In the embodiment described herein, the die-washing machine has two seats for simultaneously washing two dies. It should be however understood that the invention may be also embodied in single machines, with only one washing seat, or in machines with more than two seats for simultaneously washing more dies.

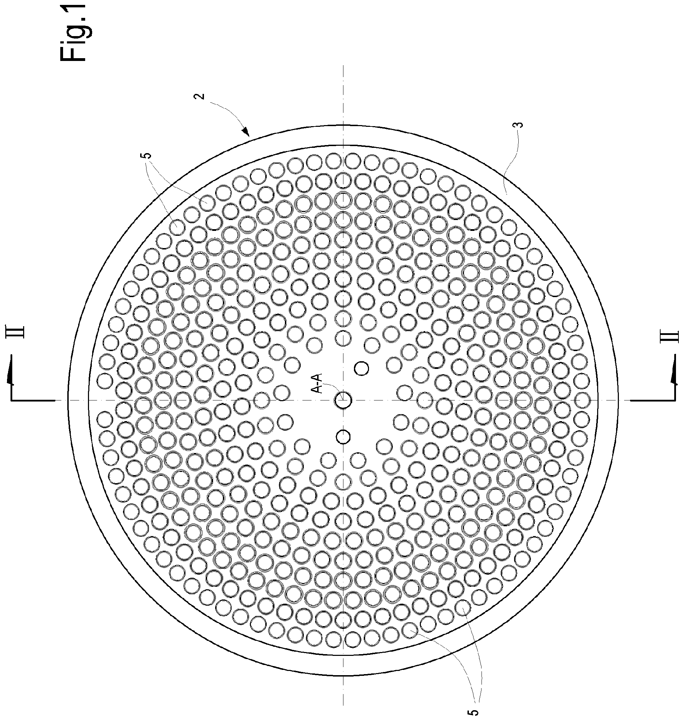

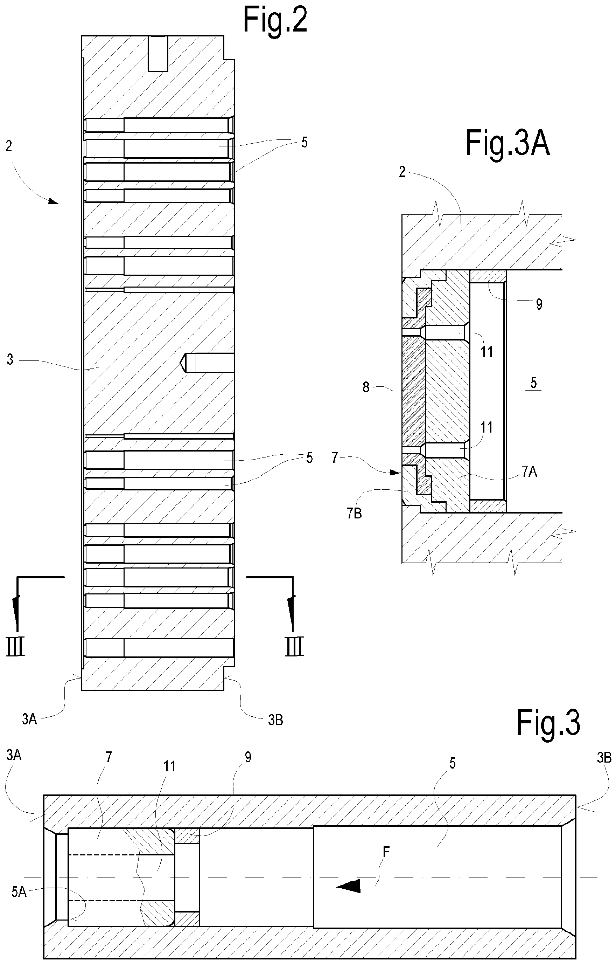

Figs. 1 and 2 schematically show a die 2 having a main body 3 where through channels 5 are provided, better shown in the cross-section of Fig. 2. The die body 3 may be substantially axial-symmetric, with a symmetry axis A-A. An insert 7 may be inserted in each channel 5, hold between an end projection 5A provided near a first face 3A of the die and a clamp ring 9, inserted with interference fit in the respective die channel 5. As better shown in Fig. 3, representing an enlarged cross-section according to line III-III of Fig. 2, the insert 7 has a through hole 11, through which dough is pushed in order to extrude the desired pasta form at the opposite face 3B of the die.

Fig. 3A shows an enlarged cross-section, similar to that of Fig. 3, of a modified embodiment of the insert 7. In this case, the insert 7 is comprised of two components 7A, 7B, that may be of metal and cupled together. An element 8 made of a synthetic material, for example Teflon® (polytetrafluoroethylene) is inserted between the two components 7A, 7B. One or more through holes 11 are provided in the inserts 7A, 7B and in the synthetic element 8.

As shown in Fig. 3A, the plastic material is exposed on a face of the die 2, more exactly on the face from which the pasta is extruded. At the opposite side, i.e. towards the channel 5 where the dough enters, the Teflon element 8 is protected by means of the metal component 7A.

As plastic is softer and less resistant to the action of the jets of washing liquid, it is suitable to use jets under higher pressure on the pasta entrance side and jets under lower pressure on the pasta exit side. This also allows further advantages, among which a reduced risk that the insert is released from its seat and, at the same time, a more effective washing of the die on the pasta entrance side (channel 5), where there is the most part of residual dough.

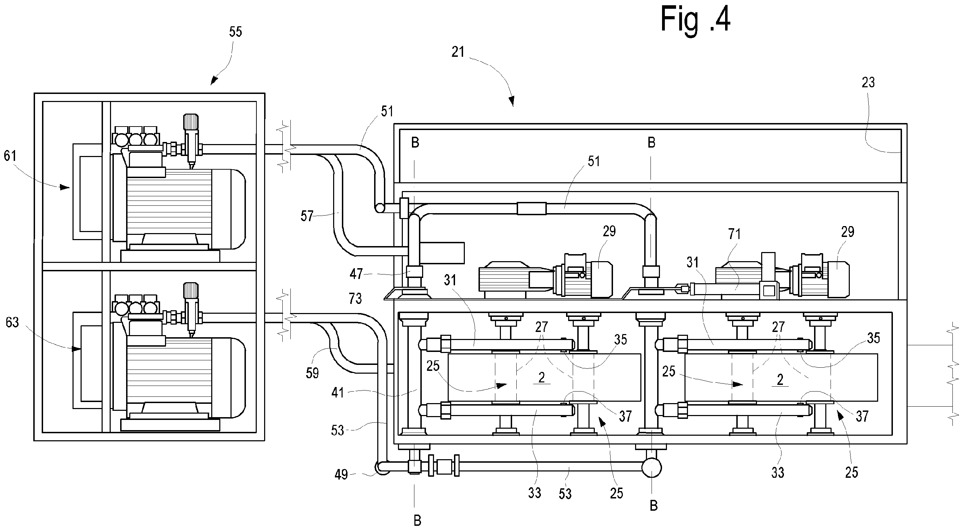

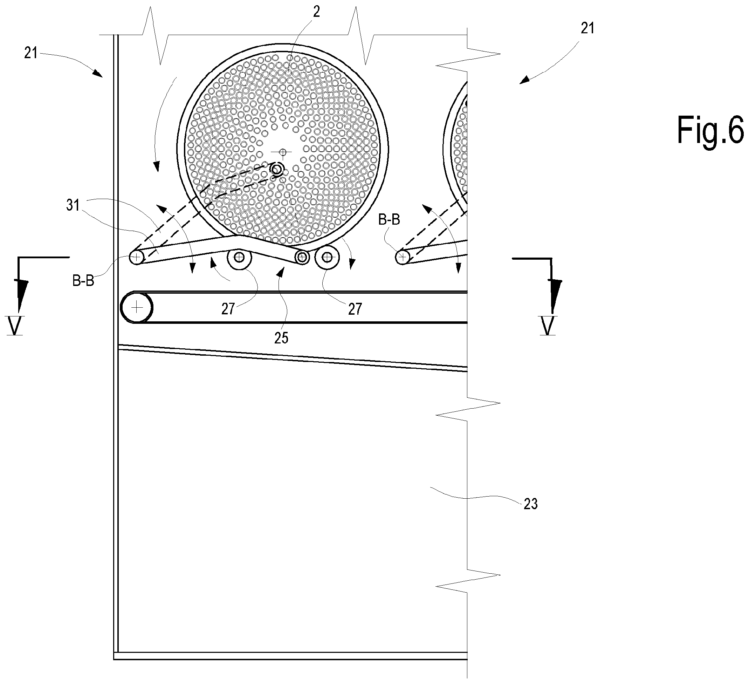

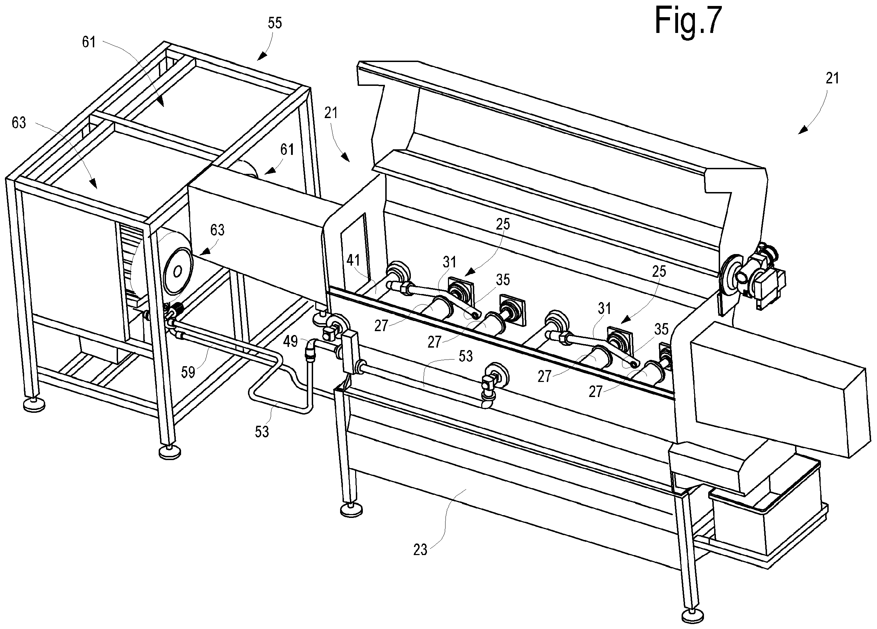

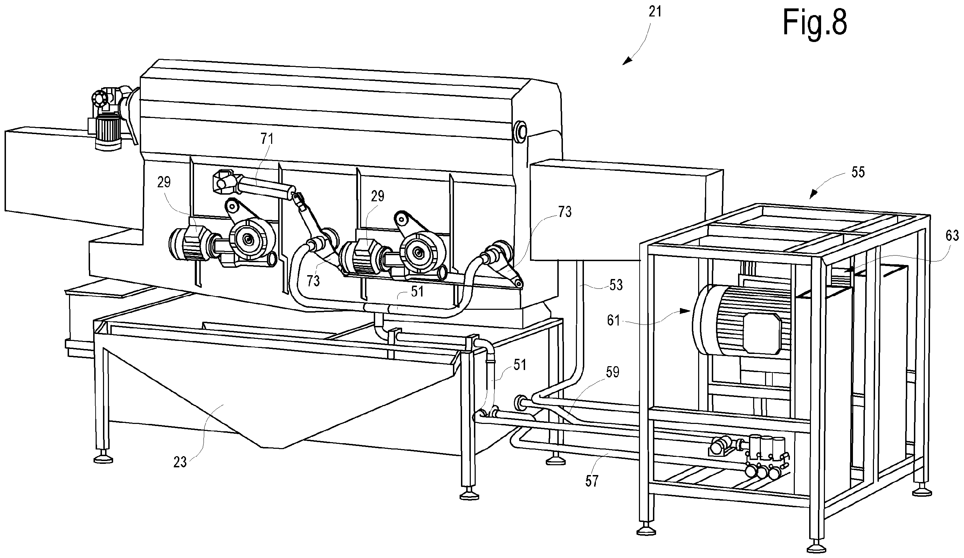

Once a batch has been processed, the die 2 is uninstalled from the processing machine and put into a die-washing machine indicated as a whole with number 21 in Figs. 3-8.

In the illustrated example, the die-washing machine 21 comprises a tank 23 for the washing liquid, typically water, used for die washing. In the illustrated example, two substantially equal seats 25 are arranged above the tank 23, where the dies 2 to be washed may be placed.

In some embodiments, each seat 25 comprises a pair of rollers 27, onto which the respective die is put. One or both rollers 27 of each seat 25 are typically motorized, in order to rotate the die resting thereon around its symmetry axis A-A. To this end, in some embodiments the die 2 may have a respective motor 29 for each pair of rollers 27 of the respective die seats 25. In other embodiments only one motor for more seats is provided, i.e. for more pairs of rollers 27.

In other embodiments, the seats for the dies may be provided with a moving mechanism to translate the dies, preferably in a reciprocating manner. The die-washing machine may be provided, in a known manner, with mechanisms to rotate and/or to translate, preferably in a reciprocating manner, the dies with respect to the machine structure and to the washing nozzles. In this way it is possible to wash both cylindrical dies and rectangular dies.

At least two washing nozzles are associated with each seat 25 for housing the dies 2 to be washed, wherein the nozzles are configured and arranged so as to generate jets of water, or other washing liquid, directed towards the die 2 arranged in the respective washing seat 25. Advantageously, the nozzles may be arranged at the ends of two respective tubular arms 31, 33. The nozzle carried at the end of the arm 31 is indicated with 35, whilst the nozzle carried at the end of the arm 33 is indicated with 37. The two nozzles 35 and 37 are directed towards each other, i.e. both against the respective faces 3A, 3B of the die 2 when the latter is inserted in the respective seat 25.

In other embodiments, the nozzles may be mounted on other movable devices.

As the channels 5 of the die are substantially orthogonal to the faces 3A, 3B of the die 2, thanks to the position taken by the die 2 with respect to the nozzles 35, 37 the jets generated by the two nozzles 35, 37 are substantially parallel to the channels 5 of the die 2 and enter therein. In this way they achieve the areas where the dough to be removed is accumulated.

Whilst in the illustrated embodiment each seat has only two opposite nozzles 35, 37, in other embodiments more than two nozzles may be provided, for instance four nozzles, two of which are arranged on a side and the other two are arranged on the other side with respect to a die 2 arranged in the seat 25 of the die-washing machine 21. Preferably, the nozzles arranged on each side of the die are integral with one another and move simultaneously.

In the illustrated example, the opposite nozzles 35, 37 are integral with each other, as it will be described below, so that they move synchronously and are substantially coaxial. In other embodiments the nozzles may be offset with respect to each other, i.e. not coaxial, even if they are directed opposite each other, i.e. they face opposite sides or faces of the same die 2 when the die is in the washing seat 25. Moreover, in some embodiments, the opposite nozzles may move not integrally with each other; for example, they may be carried by movable member that are independent of one another, i.e. each of which is provided with an own moving mechanism. In this case, the movement of the two opposite nozzles may be synchronous or non-synchronous.

However, the embodiment illustrated in the attached drawing is the preferred embodiment, as it is easier to be constructed, has less movable members and actuators and ensures therefore a greater overall reliability of the die-washing machine 21.

In advantageous embodiments, the arms 31, 33 of each seat 25 are joined to one another by means of a transverse element 41 pivoting around a respective pivot axis B-B, so that the nozzles are integral with each other and move synchronously by means of a single actuator, described below.

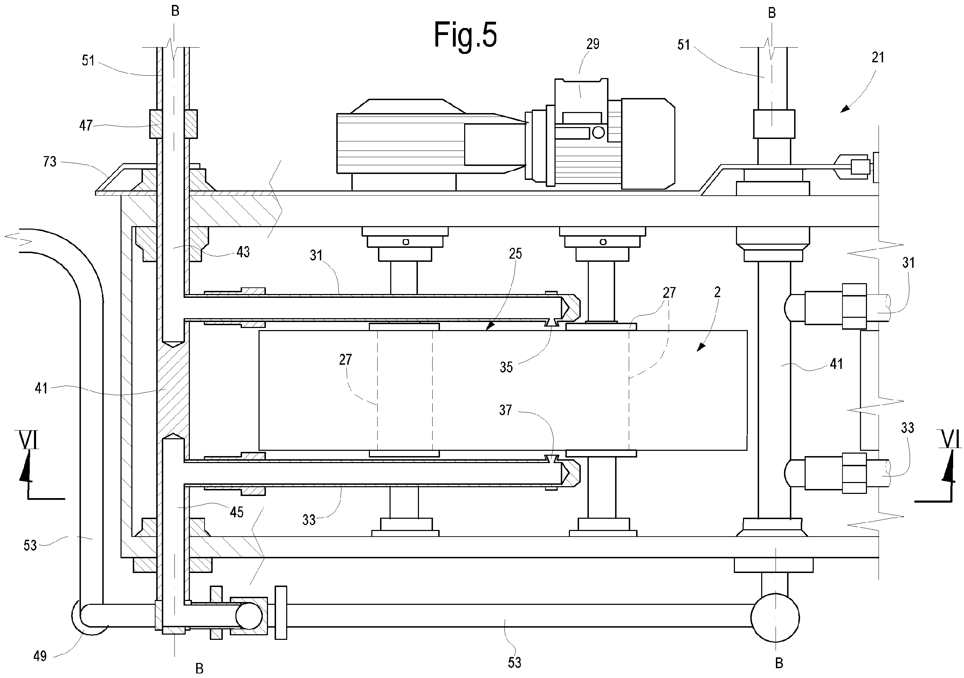

As shown in particular in Fig. 5, the transverse element 41 has two ducts 43 and 45, each of which is in fluid connection with a passage for the washing fluid provided in the arms 31 and 33, respectively. The two ducts 43 and 45 are separated from each other, so that inside them a different pressure can be kept.

The two opposite ends of the transverse element 41 are connected, through suitable joints 47 and 49, to respective supply line for water or other pressurized washing liquid, indicated with 51 and 53 respectively. The supply lines 51 and 53 are connected to a pumping unit 55, which is in turn connected to the tank 23 by means of two suction lines 57, 59.

In advantageous embodiments, the pumping unit 55 comprises a first electric pump 61 and a second electric pump 63. Each electric pump comprises an electric motor and a pump actuated by means of the electric motor. The pump may be a centrifugal or a volumetric pump, according to the characteristic curve and to the performance in terms of delivery head and flow rate, as well as to the characteristic of the hydraulic circuit where the pump is inserted.

The first electric pump 61 sucks washing water from the tank 23 through the suction line 57 and supplies washing water, under a first pressure PI, to the duct 43 through the line 51 and through the joint 47 to supply water to the nozzle 35 of each seat 25 of the die-washing machine 21.

The second electric pump 63 sucks water from the tank 23 through the suction line 59 and, delivers water under a second pressure P2 through the line 53 to the duct 49, and therefrom to the nozzle 37, through the duct 45.

By using a pumping system provided with two distinct electric pumps 61 and 63 it is possible to supply water through the delivery lines 51 and 53 under two pressures PI and P2, which can differ from one another even substantially. In some embodiments, one of the two lines is supplied with water under a pressure of about 100 bars, whilst the other line is supplied with water under a pressure for example of about 60 bars. More in general, the pressure in the delivery line under higher pressure may be by about at least 30% higher than the pressure of water in the other delivery line.

The delivery line supplying water under higher pressure is the line with the nozzle facing towards the surface 3B of the die, so that a pressurized water jet at a higher speed impacts against the die 2 with such a direction that the inserts 7 of the die 1 do not move. In this way, it is possible to use a substantially higher washing pressure for the nozzle whose jet is oriented in the same direction as the feed direction of the dough through the die 2. Moreover, on the side 3B of the die the plastic element 8 (Fig. 3A) is covered by means of the metal element 7A, and is therefore protected against the abrasive action of the high pressure jet of washing liquid.

As shown in the drawing, the arrangement of delivery ducts is double, so as to connect the two nozzles 35, 35 of the two seats 25 to one of the two pumps of the pumping system, and the two nozzles 37 to the other pump. The arrangement may be multiplied even for a greater number of seats 25; in simpler solutions only one seat 25 may be provided for the dies 2 to be washed.

The washing process substantially develops traditionally: the die 2 is held on the rollers 27 of the respective seat 25 and is driven into rotation by means of the respective motor 29, whilst the pair of opposite nozzles 35, 37 pivots around the respective pivoting axis A-A by means of the movement of the arms 31, 33. The pivoting movement of the arms 31, 33 may be controlled by means of a common actuator 71, controlling the movement of a four-bar linkage 73, whose rockers are torsionally coupled to the respective transverse elements 41.

The wash lasts a time necessary to remove residual dough from the extrusion channels 5 of the die 2 and from the inserts 7 housed therein. The washing water may be completely or partially recycled during washing. It is supplied under different pressure at the two sides or faces 3A, 3B of the dies 2, so that on the side 3B a faster jet of water (generated by a higher delivery pressure) is provided in the direction of extrusion of the dough through the die, and a slower jet of water (generated by a lower pressure) is provided on the side 3A in the direction opposite to the feed direction of the dough during extrusion.

In the illustrated embodiment, reference has been made to the washing of circular dies, in seats 25 of a die-washing machine 21, which is provided with members for the rotation of the dies around their respective axis of symmetry. However, the concepts described above and claimed herein may be also used to wash differently shaped dies, for example rectangular dies that cannot rotate around a rotation axis. In this case, as well known, the dies may move in the die-washing machine with a reciprocating translation. The reciprocating translation is combined with the rotation or pivoting movement of the arms carrying the nozzles, in order to invest all the holes of the die with the washing liquid.

It should be also understood that the invention is not limited to die-washing machines where the washing movement is imparted partially to the die and partially to the nozzle. Namely, it is possible to apply the invention also in machines where the die is still with respect to its seat in the die-washing machine, and only the nozzles move. Vice versa, the invention can be embodied also in machines where the die moves while the nozzles are in fixed position with respect to the structure of the die-washing machine.

It is also possible to provide multiple nozzles on each side of the die to be washed. For example, it is possible to provide a linear array of nozzles on each side of the die. In some cases, by varying the number of nozzles, it is possible to wash the die using only one movement, for example reciprocal translation or reciprocal rotation between arrays of nozzles and die.

While the disclosed embodiments of the subject matter described herein have been shown in the drawings and fully described above with particularity and detail in connection with several exemplary embodiments, it will be apparent to those of ordinary skill in the art that many modifications, changes, and omissions are possible without departing from the novel teachings, the principles and concepts set forth herein, and advantages of the subject matter recited in the appended claims. Hence, the proper scope of the disclosed innovations should be determined only by the broadest interpretation of the appended claims.

## Claims

1. A die-washing machine for washing dies (1) for pasta, comprising: at least one seat (25) for a die (2) to be washed; at least a first nozzle (35; 37) arranged and configured to project at least one jet of a washing liquid against a first side (3A; 3B) of a die (2) to be washed; a moving system (27, 29) to move the die (2) with respect to the nozzles with at least one of a rotation movement and a translation movement; a pumping system (51-63) to supply washing liquid to the first nozzle; wherein the pumping system is configured to supply the washing liquid to the first nozzle under a first pressure (P1; P2); **characterized in that**: at least a second nozzle (37; 35) is arranged and configured to project at least one jet of washing liquid against a second side (3B, 3A) of the die (2), the first nozzle and the second nozzle being oriented in opposite directions; and the pumping system is configured to supply the washing liquid to the second nozzle under a second pressure (P2; P1), the first pressure and the second pressure being different from one another.

2. Die-washing machine according to claim 1, wherein the seat (25) and the nozzles (35, 37) are so configured that, during washing, when the die is arranged in the seat, the jets of washing liquid generated by the nozzles are directed towards the inside of pasta extrusion channels (5) provided in the die (2), approximately parallel to the channel axes, in order to direct the jets of washing liquid in the channels (5).

3. Die-washing machine according to claim 1 or 2, **characterized in that** the pumping system comprises a first pump (61; 63) to supply the washing liquid to the first nozzle (35; 37) and a second pump (63; 61) to supply the washing liquid to the second nozzle (37; 35), the first pump delivering to the first nozzle washing liquid at a pressure different than the pressure of the washing liquid delivered by the second pump to the second nozzle.

4. Die-washing machine according to claim 1 or 2 or 3, **characterized in that** the first nozzle and the second nozzle are connected to a common movable member (31, 33, 41), wherein the movement thereof allows to move the first nozzle and the second nozzle with respect to the die (2).

5. Die-washing machine according to claims 3 and 4, **characterized in that** the movable member comprises a first duct (43; 45) in fluid connection with the first pump (61; 63) and with the first nozzle (35; 37) and a second duct (45; 43) in fluid connection with the second pump (63; 61) and the second nozzle (37; 35).

6. Die-washing machine according to claim 5, **characterized in that** the movable member comprises a first arm (31; 33) carrying the first nozzle (35; 37) and a second arm (33; 31) carrying the second nozzle (37; 35), the first arm and the second arm being integral with each other and being controlled so as to pivot or rotate around a common rotation or pivoting axis (B-B) and each arm being provided with a respective washing fluid passage connected with the first nozzle and the first pump, and with the second nozzle and the second pump, respectively.

7. Die-washing machine according to one or more of the previous claims, **characterized by** a moving device (27, 29) to move the die in the respective seat with at least one of a rotation movement and a translation movement, with respect to the machine structure.

8. Die-washing machine according to one or more of the previous claims, **characterized in that** the pumping system is configured to supply one of said first and second nozzle (35, 37) with the washing liquid under a pressure at least 30% higher than the pressure of the washing liquid supplied to the other of said first and second nozzle (35, 37).

9. Die-washing machine according to one or more of the previous claims, **characterized in that** said first nozzle and said second nozzle are coaxial.

10. A system comprising a die-washing machine according to any one of the preceding claims, and at least one die (2) arranged in the at least one seat (25), wherein the die is arranged in the seat such that the jet provided by the nozzle at a higher washing pressure is oriented in the same direction as a feed direction of the dough through the die (2).

11. A method for washing a die (2) for pasta by means of at least a first nozzle (35; 37) oriented towards a first side (3A, 3B) of the die(2), comprising the following steps:
- generating a first jet of washing liquid with the first nozzle (35; 37) directed towards the die (2);
- moving the die and the first nozzle one with respect to the other;
the method **characterized by**
- generating a second jet of washing liquid with a second nozzle (37; 35) directed towards the die (2), said second nozzle being oriented towards a second side (3B, 3A) of the die (2);
- moving the die and the second nozzle one with respect to the other;
wherein the washing liquid is supplied to the first nozzle and to the second nozzle under different pressures.

12. Method according to claim 11, wherein the jets of washing liquid are so directed as to enter from opposite sides into pasta extrusion channels (5), with which the die (2) is provided and wherein the die and the nozzles are positioned such that the nozzle providing the jet at a higher pressure is oriented in the same direction as the feed direction of the dough through the die.

13. Method according to claim 11 or 12, **characterized in that** the pressure under which the washing liquid is supplied to one of said nozzles is at least 30% higher than the pressure under which the washing liquid is supplied to the other nozzle.

14. Method according to claim 11 or 12, **characterized by** supplying the washing liquid to the first and to the second nozzle by means of a first pump (61; 63) and a second pump (63; 61), respectively.

15. Method according to claim 13, **characterized in that** the delivery pressures of the first pump and of the second pump are different from each other.

## Patentansprüche

1. Pressform-Waschmaschine zum Waschen von Pressformen (1) für Nudeln mit: mindestens einem Sitz (25) für eine zu waschende Pressform (2), mindestens einer ersten Düse (35; 37), die angeordnet und ausgebildet ist, um mindestens einen Strahl einer Waschflüssigkeit gegen eine erste Seite (3A; 3B) einer zu waschende Pressform (2) zu richten, einem Bewegungssystem (27, 29), um die Pressform (2) mit Bezug auf die Düsen in mindestens einer von einer Drehbewegung und einer Translationsbewegung zu bewegen, einem Pumpsystem (51-63), um Waschflüssigkeit der ersten Düse zuzuführen, wobei das Pumpsystem ausgebildet ist, um die Waschflüssigkeit der ersten Düse unter einem ersten Druck (P1; P2) zuzuführen, **dadurch gekennzeichnet, dass**: mindestens eine zweite Düse (37; 35) angeordnet und ausgebildet ist, um mindestens einen Strahl von Waschflüssigkeit gegen eine zweite Seite (3B, 3A) der Pressform (2) zu richten, wobei die erste Düse und die zweite Düse in entgegengesetzte Richtungen orientiert sind und das Pumpsystem ausgebildet ist, um die Waschflüssigkeit der zweiten Düse unter einem zweiten Druck (P2; P1) zuzuführen, wobei der erste Druck und der zweite Druck sich voneinander unterscheiden.

2. Pressform-Waschmaschine nach Anspruch 1, wobei der Sitz (25) und die Düsen (35, 37) so ausgebildet sind, dass während des Waschens, wenn die Pressform auf dem Sitz angeordnet ist, die Strahlen der Waschflüssigkeit, die von den Düsen erzeugt werden, auf die Innenseite von Nudel-Extrusionskanälen (5), die in der Pressform (2) vorgesehen sind, gerichtet sind, etwa parallel zu den Kanalachsen, um die Strahlen der Waschflüssigkeit in die Kanäle (5) zu richten.

3. Pressform-Waschmaschine nach Anspruch 1 oder 2, **dadurch gekennzeichnet, dass** das Pumpsystem eine erste Pumpe (61; 63) aufweist, um die Waschflüssigkeit der ersten Düse (35; 37) zuzuführen, und eine zweite Pumpe (63; 61), um die Waschflüssigkeit der zweiten Düse (37; 35) zuzuführen, wobei die erste Pumpe an die erste Düse Waschflüssigkeit mit einem Druck zuführt, der sich von dem Druck der Waschflüssigkeit unterscheidet, die durch die zweite Pumpe der zweiten Düse zugeführt wird.

4. Pressform-Waschmaschine nach Anspruch 1 oder 2 oder 3, **dadurch gekennzeichnet, dass** die erste Düse und die zweite Düse mit einem gemeinsamen bewegbaren Element (31, 33, 41) verbunden sind, wobei seine Bewegung es ermöglicht, die erste Düse und die zweite Düse mit Bezug auf die Pressform (2) zu bewegen.

5. Pressform-Waschmaschine nach Anspruch 3 und 4, **dadurch gekennzeichnet, dass** das bewegbare Element eine erste Rohrleitung (43; 45) in Fluidverbindung mit der ersten Pumpe (61; 63) und der ersten Düse (35; 37) und eine zweite Rohrleitung (45; 43) in Fluidverbindung mit der zweiten Pumpe (63; 61) und der zweiten Düse (37; 35) aufweist.

6. Pressform-Waschmaschine nach Anspruch 5, **dadurch gekennzeichnet, dass** das bewegbare Element einen ersten Arm (31; 33) aufweist, der die erste Düse (35; 37) trägt, und einen zweiten Arm (33; 31), der die zweite Düse (37; 35) trägt, wobei der erste Arm und der zweite Arm integral miteinander sind und so gesteuert werden, dass sie um eine gemeinsame Dreh- oder Schwenkachse (B-B) drehen oder schwenken und jeder Arm mit einem jeweiligen Waschflüssigkeits-Durchlass versehen ist, der mit der ersten Düse und der ersten Pumpe bzw. mit der zweiten Düse und der zweiten Pumpe verbunden ist.

7. Pressform-Waschmaschine nach einem oder mehreren der vorstehenden Ansprüche, **gekennzeichnet durch** eine Bewegungsvorrichtung (27, 29) zum Bewegen der Pressform in dem jeweiligen Sitz in mindestens einer von einer Drehbewegung und einer Translationsbewegung mit Bezug auf die Maschinenstruktur.

8. Pressform-Waschmaschine nach einem oder mehreren der vorstehenden Ansprüche, **dadurch gekennzeichnet, dass** das Pumpsystem ausgebildet ist, einer von der ersten und der zweiten Düse (35, 37) die Waschflüssigkeit unter einem Druck zuzuführen, der mindestens 30 % höher als der Druck der Waschflüssigkeit ist, die der anderen der ersten und der zweiten Düse (35, 37) zugeführt wird.

9. Pressform-Waschmaschine nach einem oder mehreren der vorstehenden Ansprüche, **dadurch gekennzeichnet, dass** die erste Düse und die zweite Düse koaxial sind.

10. System mit einer Pressform-Waschmaschine nach einem der vorstehenden Ansprüche und mindestens einer Pressform (2), die in dem mindestens einen Sitz (25) angeordnet ist, wobei die Pressform in dem Sitz so angeordnet ist, dass der Strahl, der von der Düse mit dem höheren Waschdruck in derselben Richtung wie die Förderrichtung des Teigs durch die Pressform (2) orientiert ist.

11. Verfahren zum Waschen einer Pressform (2) für Nudeln mittels mindestens einer ersten Düse (35; 37), die zu einer ersten Seite (3A, 3B) der Pressform (2) gerichtet ist, mit den folgenden Schritten:
- Erzeugen eines ersten Strahls einer Waschflüssigkeit mit der ersten Düse (35; 37), die zu der Pressform (2) gerichtet ist,
- Erzeugen eines zweiten Strahls der Waschflüssigkeit mit einer zweiten Düse (37; 35), die zu der Pressform (2) gerichtet ist, wobei die zweite Düse zu einer zweiten Seite (3B, 3A) der Pressform (2) gerichtet ist,
- Bewegen der Pressform und der zweiten Düse mit Bezug aufeinander,
wobei die Waschflüssigkeit der ersten Düse und der zweiten Düse mit unterschiedlichen Drücken zugeführt wird.

12. Verfahren nach Anspruch 11, wobei die Strahlen der Waschflüssigkeit so gerichtet sind, um von gegenüberliegenden Seiten in Nudel-Extrusionskanäle (5) einzutreten, mit denen die Pressform (2) versehen ist, und wobei die Pressform und die Düsen so positioniert werden, dass die Düse, die den Strahl mit einem höheren Druck liefert, in derselben Richtung wie die Förderrichtung des Teigs durch die Pressform orientiert ist.

13. Verfahren nach Anspruch 11 oder 12, **dadurch gekennzeichnet, dass** der Druck, mit dem die Waschflüssigkeit einer der Düsen zugeführt wird, mindestens 30 % höher ist als der Druck, mit dem die Waschflüssigkeit der anderen Düse zugeführt wird.

14. Verfahren nach Anspruch 11 oder 12, **gekennzeichnet durch** die Zufuhr der Waschflüssigkeit an die erste und die zweite Düse mittels einer ersten Pumpe (61; 63) bzw. einer zweiten Pumpe (63; 61).

15. Verfahren nach Anspruch 13, **dadurch gekennzeichnet, dass** sich die Zufuhrdrücke der ersten Pumpe und der zweiten Pumpe voneinander unterscheiden.

## Revendications

1. Une machine lave-matrices pour le lavage de matrices (1) pour pâte alimentaire, comprenant : au moins un logement (25) pour une matrice (2) à laver ; au moins une première buse (35 ; 37) agencée et configurée pour projeter au moins un jet de liquide de lavage contre un premier côté (3A ; 3B) d'une matrice (2) à laver ; un système de déplacement (27, 29) pour déplacer la matrice (2) par rapport aux buses avec un moins un mouvement de rotation et un mouvement de translation ; un système de pompage (51-63) pour fournir du liquide de lavage à la première buse ; le système de pompage étant configuré pour fournir le liquide de lavage à la première buse à une première pression (P1 ; P2) ; **caractérisé en ce que** : au moins une seconde buse (37 ; 35) est agencée et configurée pour projeter au moins un jet de liquide de lavage contre un second côté (3B, 3A) de la matrice (2), la première buse et la seconde buse étant orientées dans des directions opposées ; et le système de pompage est configuré pour fournir le liquide de lavage à la seconde buse à une seconde pression (P2 ; P1), la première pression et la seconde pression étant différentes l'une de l'autre.

2. Machine lave-matrices selon la revendication 1, dans laquelle le logement (25) et les buses (35, 37) sont configurés de telle sorte que, durant le lavage, lorsque la matrice est agencée dans le logement, les jets de liquide de lavage générés par les buses sont dirigés vers l'intérieur de canaux d'extrusion de pâte alimentaire (5) prévus dans la matrice (2), approximativement parallèles aux axes des canaux, afin de diriger les jets de liquide de lavage dans les canaux (5).

3. Machine lave-matrices selon la revendication 1 ou 2, **caractérisée en ce que** le système de pompage comprend une première pompe (61 ; 63) pour fournir le liquide de lavage à la première buse (35 ; 37) et une seconde pompe (63, 61) pour fournir le liquide de lavage à la seconde buse (37 ; 35), la première pompe alimentant la première buse en liquide de lavage à une pression différente de celle du liquide de lavage fourni par la seconde pompe à la seconde buse.

4. Machine lave-matrices selon la revendication 1 ou 2 ou 3, **caractérisée en ce que** la première buse et la seconde buse sont connectées à un organe mobile commun (31, 33, 41) dont le mouvement permet de déplacer la première buse et la seconde buse par rapport à la matrice (2).

5. Machine lave-matrices selon les revendications 3 et 4, **caractérisée en ce que** l'organe mobile comprend un premier conduit (43 ; 45) en communication fluidique avec la première pompe (61 ; 63) et avec la première buse (35 ; 37) et un second conduit (45 ; 43) en communication fluidique avec la seconde pompe (63 ; 61) et la seconde buse (37 ; 35).

6. Machine lave-matrices selon la revendication 5, **caractérisée en ce que** l'organe mobile comprend un premier bras (31 ; 33) portant la première buse (35 ; 37) et un second bras (33 ; 31) portant la seconde buse (37 ; 35), le premier bras et le second bras étant d'un seul tenant l'un avec l'autre et étant commandés de manière à pivoter ou tourner autour d'un axe commun de pivotement ou de rotation (B-B) et chaque bras étant pourvu d'un passage de fluide lavage respectif connecté avec la première buse et la première pompe, et avec la seconde buse et la seconde pompe, respectivement.

7. Machine lave-matrices selon l'une ou plusieurs des revendications précédentes **caractérisée par** un dispositif de déplacement (27, 29) pour déplacer la matrice dans son logement respectif avec au moins un mouvement de rotation et un mouvement de translation, par rapport à la structure de la machine.

8. Machine lave-matrices selon l'une ou plusieurs des revendications précédentes, **caractérisée en ce que** le système de pompage est configuré pour alimenter l'une desdites première et seconde buses (35, 37) avec le liquide de lavage à une pression au moins supérieure de 30% à la pression du liquide de lavage fourni à l'autre desdites première et seconde buses (35, 37).

9. Machine lave-matrices selon l'une ou plusieurs des revendications précédentes, **caractérisée en ce que** ladite première buse et ladite seconde buse sont coaxiales.

10. Un système comprenant une machine lave-matrices selon l'une quelconque des revendications précédentes, et au moins une matrice (2) agencée dans ledit logement (25), dans lequel la matrice est agencée dans le logement de telle sorte que le jet fourni par la buse à une pression de lavage supérieure est orienté dans la même direction qu'une direction d'avancement de la pâte à travers la matrice (2).

11. Un procédé de lavage d'une matrice (2) pour pâte alimentaire au moyen d'au moins une première buse (35 ; 37) tournée vers un premier côté (3A, 3B) de la matrice (2), comprenant les étapes suivantes consistant à :
- générer un premier jet de liquide de lavage avec la première buse (35 ; 37) dirigée vers la matrice (2) ;
- déplacer la matrice et la première buse l'une par rapport à l'autre ;
ce procédé étant **caractérisé par**
- la génération d'un second jet de liquide de lavage avec une seconde buse (37 ; 35) dirigée vers la matrice (2), ladite seconde buse étant orientée vers un deuxième côté (3B, 3A) de la matrice (2) ;
- le déplacement de la matrice et de la seconde buse l'une par rapport à l'autre ;
dans lequel le liquide de lavage est fourni à la première buse et à la second buse avec des pressions différentes.

12. Procédé selon la revendication 11, dans lequel les jets de liquide de lavage sont dirigés de manière à entrer par des côtés opposés dans des canaux d'extrusion de pâte alimentaire (5) dont est pourvue la matrice (2) et dans lequel la matrice et les buses sont positionnées de telle sorte que la buse fournissant le jet à la pression la plus élevée est orientée dans la même direction que la direction d'avancement de la pâte à travers la matrice.

13. Procédé selon la revendication 11 ou 12, **caractérisé en ce que** la pression à laquelle le liquide de lavage est fourni à l'une desdites buses est supérieure d'au moins 30% à la pression à laquelle le liquide de lavage est fourni à l'autre buse.

14. Procédé selon la revendication 11 ou 12, **caractérisé par** la fourniture du liquide de lavage à la première et à la seconde buses au moyen d'une première pompe (61 ; 63) et d'une seconde pompe (63, 61), respectivement.

15. Procédé selon la revendication 13, **caractérisé en ce que** les pressions fournies par la première pompe et la seconde pompe sont différentes l'une de l'autre.
